Europäisches Patentamt

European Patent Office

Office européen des brevets

(19)

(11) Publication number: **0 231 998**
**A1**

# (12) EUROPEAN PATENT APPLICATION

(21) Application number: 87300083.0

(22) Date of filing: 07.01.87

(51) Int. Cl.⁴: **C 04 B 38/00**

(30) Priority: 16.01.86 GB 8601056
20.08.86 GB 8620198

(43) Date of publication of application:
12.08.87 Bulletin 87/33

(84) Designated Contracting States:
BE DE FR GB IT NL

(71) Applicant: **Quarmby, Arthur**
**Underhill**
**Holme, near Huddersfield West Yorkshire (GB)**

(72) Inventor: **Quarmby, Arthur**
**Underhill**
**Holme, near Huddersfield West Yorkshire (GB)**

(74) Representative: **Norcliffe, Kenneth Adrian**
**33, Delph Lane Netherton**
**Huddersfield West Yorkshire, HD4 7JA (GB)**

(54) Building material and method of producing same.

(57) An inert building material having high strength, high thermal insulation. low water absorption, and very low weight comprises bloated pellets (11) of bloating clay which whilst still hot. soft and sticky are compacted together into a mass under their own weight or by the application of a positive pressure so that their vitrifying skins fuse where they touch but remain intact and continue to enclose their foamed cores, the mass then being allowed to cool and harden. The mass may constitute an individual building block (10), tile, or pipe, or may constitute a slab (33) which is then cut into individual blocks (10).

FIG 7

EP 0 231 998 A1

Bundesdruckerei Berlin

Description

Building Material and Method of Producing Same

This invention relates to building material, and more particularly to building material of light weight suitable inter alia for building blocks.

The phenomenon of bloatable materials is well known in the clayware industries. Many of the younger clays throughout the world contain impurities of various kinds including carbon which when fired compel the clay to expand into cellular form due to the formation of gas bubbles. Such so-called "bloating" clays occur in large deposits at or near the surface of the ground, and are currently regarded as a nuisance rather than an asset. Shales and even slates can also be induced to bloat. The coal mining industry produces vast quantities of bloatable tailings, and has to pay for their disposal.

The phenomenon of bloating, whilst a great problem for most of the clayware industries, has been used to advantage in certain products, noteably light-weight expanded clay balls which are used in horticulture as a base material on which to stand plant-pots, and in the building industry either as back-fill or as aggregate in the production of cement-bonded building blocks. These expanded clay balls are very light and strong, and their water absorption is low. They are manufactured by firing pellets of bloating clay in a suitable kiln in which the pellets whirl around and thus tend to remain apart, for example using a rotary kiln as disclosed in GB 969218, GB 1313323 and GB 1347102 or a kiln of fluidised-bed type. The pellets bloat to form expanded balls as they become hot, each ball developing a vitrifying skin, flexible and tending to become sticky, which contains the gas bubbles and completes the bloating of the ball. The size of the balls can be generally controlled by varying the size of the pellets, that is to say small pellets produce small bloated balls whilst large pellets produce large balls. The aim during manufacture is to prevent the balls coming into contact with one another so that clean, separate, expanded balls emerge, cooled and hard, at the end of the process. Sometimes, however, some of the balls do come accidentally into mutual contact during the firing and bloating process, and fuse together into a mass of slag in which their individual skins tend to be destroyed, such a mass being known in the trade as a "pig". These pigs are thrown out and are considered to be useless except for land-fill.

It has been previously proposed in US 3050812 to manufacture moulded solid glass-like clay products by heating bloating clay, either in unconditioned form or preformed into particles of uniform size, in a rotary kiln preferably in combination with a moving hearth kiln to a dry bloated condition below the temperature of fusion, discharging the heated material into a relatively cool mould box, and applying pressure to the material in the mould box by means of a ram whilst confining the gases therein whereby the hot material is rapidly converted throughout from a solid to a fluid, fused condition, after which the material may be annealed to remove stresses. Other proposals for manufacturing similar dense, rock-like, vitreous materials from bloating clays are disclosed in US 1809215, US 1824684 and US 1892583.

It has also been previously proposed in US 1818101 to manufacture building material having a substantially uniform cellular structure throughout by feeding bloating clay in granular form in a tightly packed mass into the throat of a die the discharge end of which is heated to cause the material to begin to bloat whilst still closely confined within the die, this bloating together with the positive infeed of fresh material causing the extrusion of the bloated material in a continuous slab into an annealing zone.

In yet another prior proposal, disclosed in US 2533899, bloating clay is ground to a uniform particle size and may then be mixed with water to form a slurry, is heated as a mass, placed in a mould, and thereafter subjected to further heating to form products which are vesicular, that is to say have a uniform structure of small cells.

The object of the present invention is to utilise the phenomenon of bloating to produce building material having a novel and advantageous structure.

According to one aspect of the invention, building material comprises bloated pellets of bloatable material and is characterised in that said pellets are so compacted together that their vitrified skins fuse where they touch but remain intact and continue to enclose their foamed cores.

According to another aspect of the invention, a method of producing building material comprises the steps of forming pellets of bloatable material and firing them in a kiln of a type which tends to keep them apart at a temperature high enough to cause them to bloat but not so high as to cause them to melt, and is characterised by the further steps of ensuring that their skins are rendered sticky, compacting then together when bloated and whilst still hot, soft and sticky into a mass wherein their skins fuse where they touch but remain intact and continue to enclose their foamed cores, and allowing the mass to cool.

The invention will now be described, by way of example only, with reference to the accompanying drawings of which:-

Fig. 1 is a cross-section through an actual building block produced in accordance with the invention;

Fig. 2 is a cross-section of bloated pellets brought together in a theoretically perfect formation before any compaction thereof;

Fig. 3 is a cross-section of bloated pellets in a theoretically perfect hexagonal formation after equal compaction thereof from all sides sufficient substantially to eliminate spaces therebetween.

Fig. 4 is a perspective view of an assembly of four rhombic dodecahedra constituting the geometric solids formed by four bloated pellets after equal compaction thereof from all sides sufficient substantially to eliminate spaces therebetween, each dodecahedron corresponding to one of the hexagons shown in Fig. 3;

Fig. 5 is a cross-section similar to Fig. 3 of bloated pellets in a theoretically perfect formation after compaction thereof in one direction only sufficient substantially to eliminate spaces therebetween;

Fig. 6 is a diagrammatic side elevation of means for effecting a method of producing individually moulded building blocks; and

Fig. 7 is a diagrammatic side elevation of means for effecting a method of producing building blocks by a continuous process.

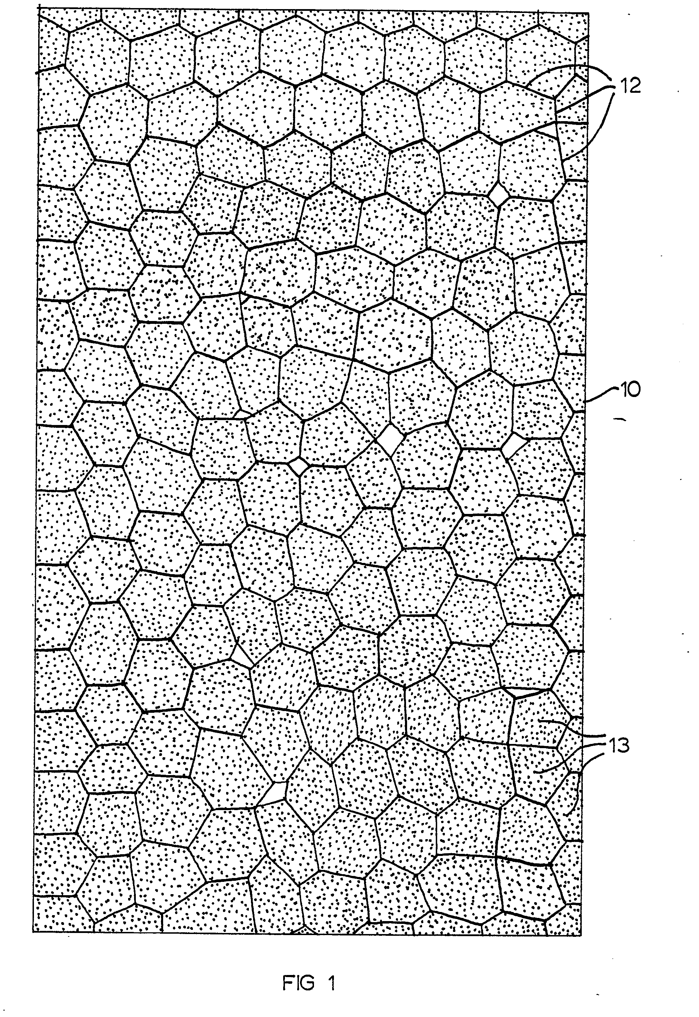

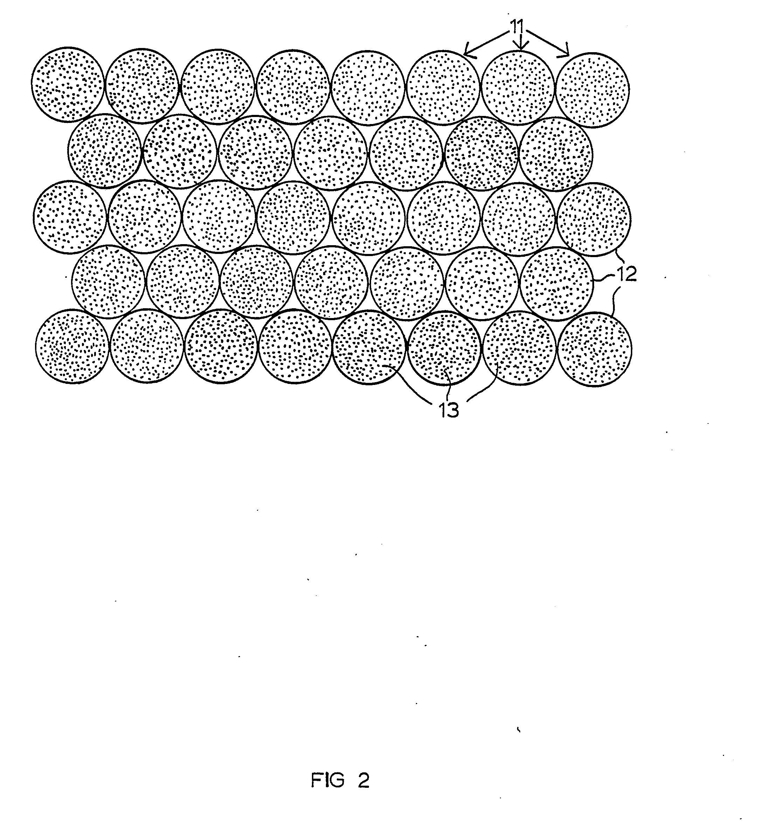

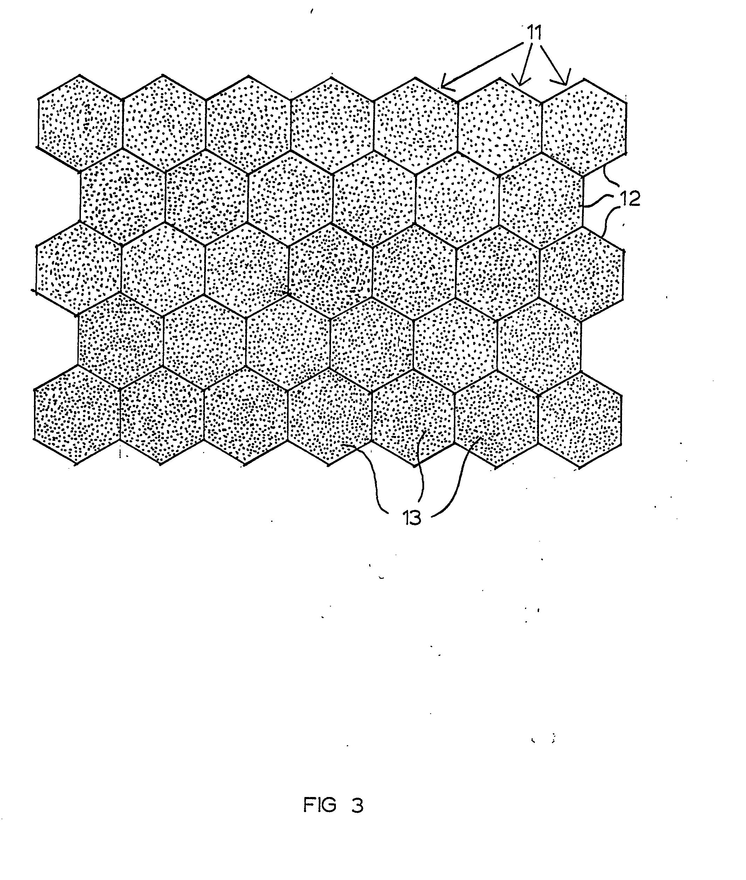

Referring now to Figs. 1 to 5 of the drawings, building material for use for example as building blocks such as 10 is manufactured from bloating clay which is first formed into pellets of the requisite size. These pellets are fed into a kiln of a type which tends to keep them apart as hereinbefore described, and fired at a temperature high enough to cause them to bloat but not so high as to cause them to melt. The bloated pellets 11 thus produced have vitrifying skins 12, flexible and tending to become sticky, enclosing foamed cores 13. It is essential to ensure that the skins 12 are rendered sticky at this stage of the process for a sufficient period of time to enable fusing to be effectively achieved as hereinafter described. Temperature and stickiness are interrelated, therefore the skins 12 can be rendered sticky by precise temperature control. However, said period can be more readily controlled, whereby the production process is facilitated, by rendering the skins 12 sticky by coating the bloated pellets 11 with either a glaze or a clay slurry. If a coating material is employed which vitrifies at a lower temperature than the pellets, the coating will be vitrified by the residual heat of the pellets. Glazing the bloated pellets 11 has two further advantages - they fuse together more readily, and the finished product has an improved resistance to water absorption. The bloated pellets are next allowed to fall together, whilst they are still hot, soft and sticky, into the confines of at least one mould where they form a mass which is compacted under its own weight so that spaces between the pellets 11 tend to be somewhat reduced in size and the skins 12 of the pellets fuse together and deform where they touch but remain intact and continue to enclose the foamed cores 13 of the pellets. The mass is then allowed to cool and harden.

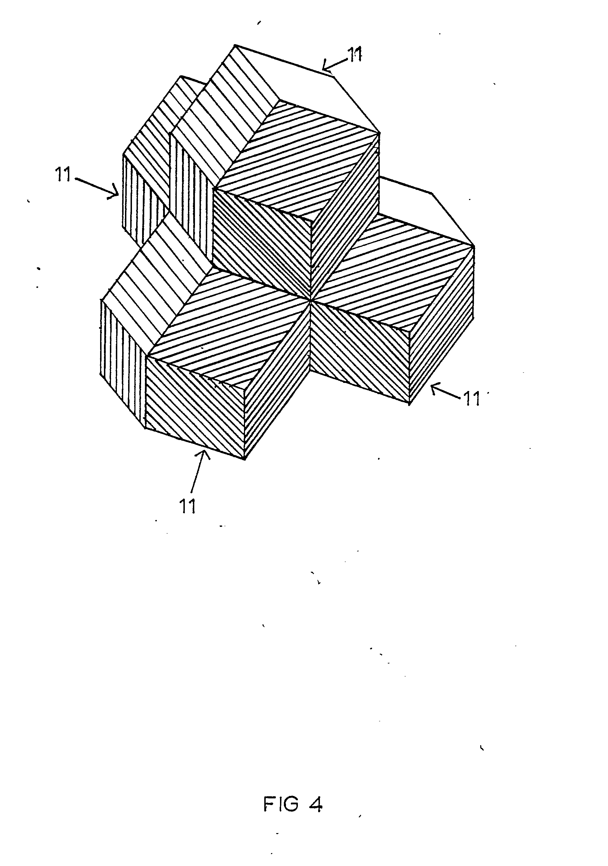

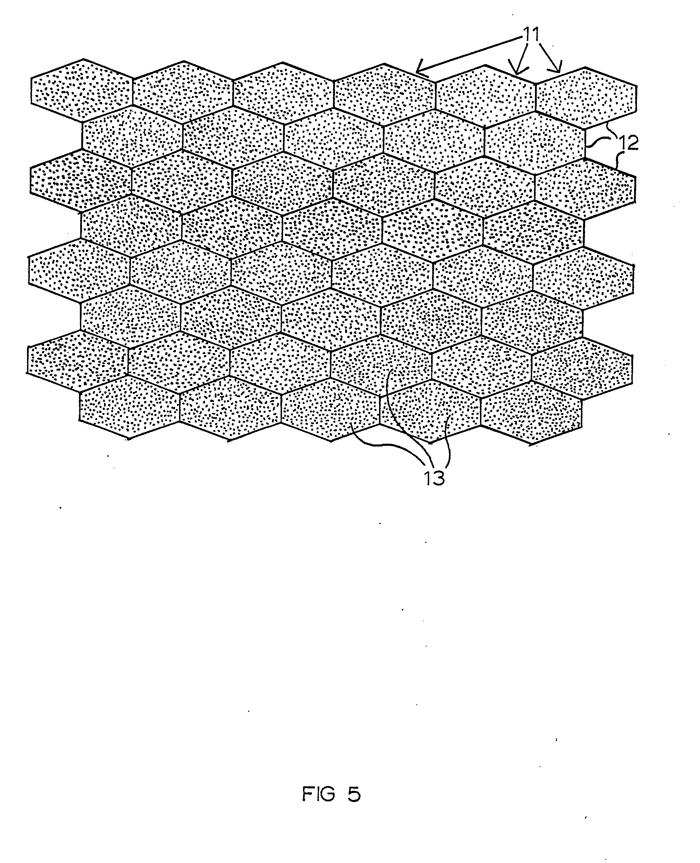

The product can be improved by compacting the mass prior to cooling by the application of a positive pressure the maximum value of which is no greater than that which suffices to ensure that spaces between the pellets 11 are substantially eliminated. A positive pressure lower than said maximum value causes the size of the spaces between the pellets 11 to be proportionately reduced. Positive pressures of or lower than said maximum value still cause the skins 12 of the pellets to fuse together where they touch but remain intact and continue to enclose the foamed cores 13 of the pellets. A positive pressure of said maximum value, applied equally from all sides, theoretically deforms the skins 12 into a structure comprising an assembly of rhombic dodecahedra (see Fig. 4) which fit together exactly in what might be described as a three-dimensional honeycomb pattern, similar to the skeletal structure of Radiolaria (a class of Protozoa). A positive pressure of said maximum value applied in one direction only will theoretically produce the flattened effect illustrated in Fig. 5, which should give an increased tensile strength in directions perpendicular to that in which said pressure is applied. However, more random formations are usually obtained in practice.

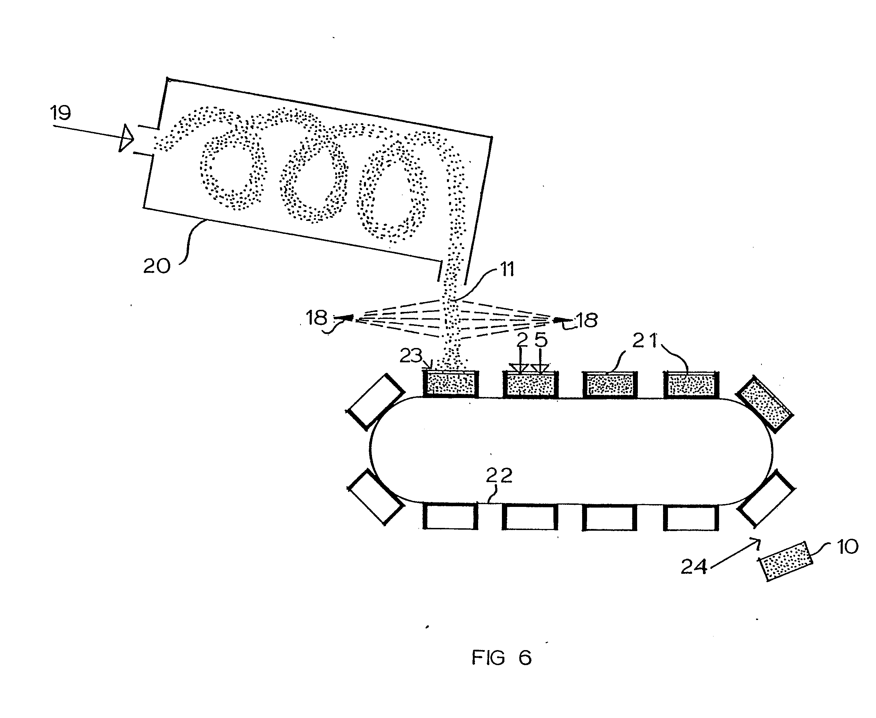

Referring now to Fig. 6, one method of producing the building blocks 10 comprises first forming bloating clay into pellets of the requisite size by means of any suitable apparatus. The pellets are fed as indicated by the arrow 19 into a rotary kiln 20, fired at a suitable temperature so that they become bloated but do not melt, and then rendered sticky either by temperature control or by coating. Coating can be effected, if desired, by means of nozzles 18 arranged to spray the bloated pellets 11 as they emerge from the kiln 20. The bloated pellets 11 are then allowed to fall into a multiplicity of individual moulds 21 carried by an endless conveyor 22 having a filling station 23 and a discharge station 24. The mass of pellets 11 in each mould 21 is compacted under its own weight so that the skins 12 of the pellets deform and fuse together as hereinbefore described. The masses cool and harden quickly due to their relatively small size, and the portions of material then removed from the moulds 21 constitute finished building blocks 10. In one modification of this method each mass is compacted, for example by means of a ram or a roller represented by the arrows 25, by the application of a positive pressure the maximum value of which is hereinbefore defined, so as to produce in theory the formation shown in Fig. 5. In another modification, a fluidised-bed kiln is employed instead of a rotary kiln. In a further modification, the moulds 21 are carried by a rotary table instead of by an endless conveyor. In yet another modification, the moulds are so shaped that roof-tiles, floor-tiles, drainage pipes and other suitable clayware products are manufactured instead of building blocks. Cost is saved and a superior, that is to say unbroken and therefore less water permeable, external surface is obtained by employing individual moulds to avoid the need for cutting the hardened material.

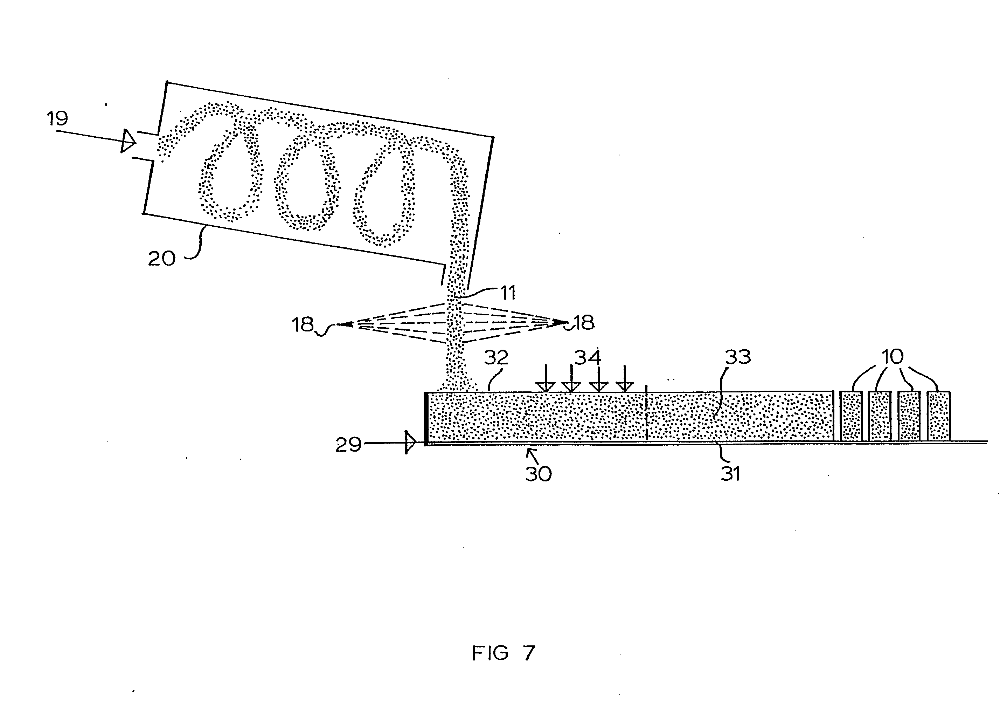

Referring now to Fig. 7, in another production method the building blocks 10 are manufactured in a continuous process from pellets of bloating clay which are formed, fired in a rotary kiln 20, and if desired coated, in precisely the same manner as that described in the preceding paragraph. The bloated pellets 11 are next allowed to fall together, whilst they are still hot, soft and sticky, into the confines of a single mould 30 where they form a mass which is compacted under its own weight so that once again the skins 12 of the pellets deform and fuse together as hereinbefore described. The mould 30 may be heated, at least when the process is being started up, and comprises a metal floor 31 movable in the direction of the arrow 29 and disposed between parallel metal walls 32 so that a continuous slab 33 of the mass is produced. This slab is cut into portions constituting building blocks 10 by means of a stone saw (not shown) after it has cooled and hardened. In one modification of this continuous process the mass is compacted, for example by means of a ram or a roller represented by the arrows 34, by the application of a positive pressure the maximum value of which is hereinbefore defined, so as to produce in theory the formation shown in Fig. 5. In another modification, a fluidised-bed kiln is employed instead of a rotary kiln.

The building material produced in accordance with this invention is inert and has high strength, high thermal insulation, low water absorption, and very low weight. These factors can be varied as required by varying either the size of the pellets, the type of raw material used, the coating if any applied to the bloated pellets 11, or the amount of pressure if any applied to the or each mass in its mould 21 or 30.

Thus there is provided a building material which has a primary skeletal structure constituted by the fused skins of the bloated pellets, and a secondary structure constituted by the foamed cores of the pellets. The material has superior physical characteristics to building materials currently available, and should be cheaper to produce.

## Claims

1. Building material comprising bloated pellets (11) of bloatable material characterised in that said pellets are so compacted together that their vitrified skins (12) fuse where they touch but remain intact and continue to enclose their foamed cores (13).

2. A method of producing building material comprising the steps of forming pellets of bloatable material and firing them in a kiln (20) of a type which tends to keep them apart at a temperature high enough to cause them to bloat but not so high as to cause them to melt, characterised by the further steps of ensuring that their skins (12) are rendered sticky, compacting them together when bloated and whilst still hot, soft and sticky into a mass wherein their skins (12) fuse where they touch but remain intact and continue to enclose their foamed cores (13), and allowing the mass to cool.

3. A method according to claim 2, further characterised in that the skins (12) of the bloated pellets (11) are rendered sticky by coating them with a glaze.

4. A method according to claim 2, further characterised in that the skins (12) of the bloated pellets (11) are rendered sticky by coating them with a clay slurry.

5. A method according to any one of claims 2 to 4, further characterised in that finished portions (10) of the material are produced by compacting the bloated pellets (11) together into masses in individual moulds (21).

6. A method according to claim 5, further characterised in that the moulds (21) are carried by an endless conveyor (22).

7. A method according to claim 5, further characterised in that the moulds (21) are carried by a rotary table.

8. A method according to any one of claims 2 to 4, further characterised in that a continuous slab (33) of the material is produced by compacting the bloated pellets (11) together in a mass in a mould (30) at least the floor (31) of which is movable, the slab (33) being cut into portions (10) after cooling.

9. A method according to any one of claims 2 to 8, further characterised in that the or each mass is compacted under its own weight.

10. A method according to any one of claims 2 to 8, further characterised in that the or each mass is compacted by the application of pressure no greater than that which suffices to ensure that spaces between the bloated pellets (11) are substantially eliminated.

FIG 1

0231998

0231998

FIG 2

FIG 3

FIG 4

FIG 5

FIG 6

FIG 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | AT-A- 252 783 (H.J. KRAUSE) <br> * Claims 1,2; page 2, lines 25-27 * | 1,2,10 | C 04 B 38/00 |
| X | FR-A-2 136 861 (CERIC) <br><br> * Claims 1,4; page 5, lines 3-5 * | 1,2,5, 6,10 | |
| X | DE-A-1 940 358 (H. BRONNER) <br> * Claim 1; page 5, lines 7-11 * | 1,9 | |
| A | US-A-2 271 845 (J.R. PARSONS) <br> * Page 1, right-hand column, lines 15-26; page 2, left-hand column, lines 20-25; page 2, right-hand column, lines 49-53 * | 1-3,8 | |
| A | GB-A-1 121 266 (CELOTEX CORP.) <br> * Claim 1; page 2, lines 39-49 * | 1,4 | **TECHNICAL FIELDS SEARCHED (Int. Cl.4)** <br><br> C 04 B 38/00 |

The present search report has been drawn up for all claims

| Place of search | Date of completion of the search | Examiner |
|---|---|---|
| THE HAGUE | 03-04-1987 | DAELEMAN P.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82